# EUROPEAN PATENT SPECIFICATION

(11) **EP 4 029 472 B1**
(45) Date of publication and mention of the grant of the patent: **11.09.2024**
(21) Application number: 21151635.6
(22) Date of filing: 14.01.2021
(51) Int. Cl.: A61C 17/20

(54) **TOOL FOR A DENTAL TREATMENT AND METHOD FOR MANUFATURING SUCH A TOOL**
WERKZEUG FÜR EINE ZAHNÄRZTLICHE BEHANDLUNG UND VERFAHREN ZUR HERSTELLUNG EINES SOLCHEN WERKZEUGS
OUTIL POUR UN TRAITEMENT DENTAIRE ET PROCÉDÉ DE FABRICATION D'UN TEL OUTIL

(43) Date of publication of application: 20.07.2022
(73) Proprietor: Ferton Holding S.A., 2800 Delémont (CH)
(72) Inventor: BENOIT, Tristan, 74140 Yvoire (FR); BIENAIMÉ, Alex, 39220 Les Rousses (FR); MOSIMANN, Laurent, 1291 Commugny (CH); BEANI, Florent, 01170 Gex (FR); SPIEZIA, Giovanni, 1227 Geneva (CH)
(74) Representative: Müller Schupfner & Partner Patent- und Rechtsanwaltspartnerschaft mbB (Muc)

(56) References cited:
- DE-U1- 202012 000 970
- US-A1- 2018 280 113

## Description

The present invention concerns a tool for a dental treatment and a method for manufacturing such a tool.

Particularly, the present invention concerns a tool for a dental treatment that performs a vibration movement such as an oscillating movement during its operation. For example, the tool is an ultrasonic scaler that is intended for removing dental calculus during a dental treatment.

Dental calculus develops mostly in mouth areas that are difficult to access, in particular during home care treatments, for example by a toothbrush or a water spray treatment. These areas are also difficult to access during a professional care treatment, especially during scaling, and calculi formed are hard and strongly attached to the teeth.

Ultrasonic scaling instruments are well known to remove hard calculus due to their power of ultrasonic vibrations and a low impact on teeth. A removal capacity of the ultrasonic scaling instrument is achieved by their ultrasonic vibrational power.

For supplying the ultrasonic scaling instrument with an electric energy, the tool includes a first electronic circuit. In addition to the electronic supply for the vibrational source of the ultrasonic tool usually further electronic components exist, which have to be supplied with electronic energy by a second electronic circuit. However, the voltage needed for supplying the additional electronic components, such as a LED lamps at the distal end of the tool, is small compared to the voltage needed for supplying and controlling the vibrational source of the ultrasonic scaling instrument.

Since the first electronic circuit and the second electronic circuit use the same supply voltage, a transformer is typically used to increase the voltage used for the first electronic circuit and the same or a second transformer is used to decrease the voltage used for the second electronic circuit. Due to the environmental conditions of the tool, which for example include a permanent or periodical treatment of the tool with water and/or sterilization means, the first electronic circuit and the second electronic circuit are prone for establishing a leakage current, since the wires of the first electronic circuit and the second electronic circuit are affected by the environmental conditions, such as being exposed to water and/or sterilization liquid. Because the first electronic circuit and the second electronic circuit are interlinked with each other via the transformer, a leakage current in the second electronic circuit strongly affects the current in the first electronic circuit and the higher voltage of the first electronic circuit. As a result, there is a certain probability that even the patient being treated by the tool realizes this leakage current, which controls the vibrational source of the ultrasound scaler tool.

The patient or operator could even experience an electrocution being proportional to the current passing through the leakage line. Furthermore, there is a risk that the leakage current or leakage line could corrupt electronic signals or even damage the electronic circuit, which generates undesired answers.

US 2018 028 113 A1 describes a plug-in element, being intended to supply electrical energy to both the ultrasonic source and the radiation source.

Considering the above, it was an object of the present invention to provide a tool having a vibrational source, which can be controlled in a more operationally reliable manner compared to those tools known from the prior art and which has a reduced probability for electrocution.

The present invention is solved by a tool for a dental treatment according to claim 1, and a method for manufacturing a tool according to claim 12.

According to a first aspect of the present invention a tool for a dental treatment, in particular a scaler, is provided, comprising
- a handpiece having a transducer,
- a first electronic circuit for supplying and/or controlling the transducer for generating a vibration and
- a second electronic circuit for supplying and/or controlling an additional component,
wherein the first electronic circuit and the second electronic circuit are electrically isolated from each other by completely embedding the second electronic circuit in a plug-in element, in particular for a contact section of the tool.

Contrary to the state of the art, it is provided according to the present invention that the second electronic circuit is embedded in a plug-in element for insulating the first electronic circuit and/or the second electronic circuit. It turned out that by incorporating and especially embedding the second electronic circuit into such a plug-in element, it is possible to establish an insulation, which corresponds to an equivalent resistance of 1 MΩ or greater. Furthermore, the first electronic circuit and/or the second electronic circuit are protected from the environment, which would otherwise affect this first electronic circuit and/or second electronic circuit and could create a leakage current.

According to the present invention, it is provided that only the second electronic circuit is embedded into the plug-in element. It turned out that it is sufficient to only embed the second electronic circuit into the plug-in element for reducing the probability of leakage currents in the second electronic circuit, which, in turn, affects the operational behavior of the first electronic circuit, which controls and supplies the ultrasonic vibrational source by electric energy.

Preferably, it is provided that the plug-in element is massive. Thus, it is possible in an advantageous manner to guarantee that the wires of the second electronic circuit are not in contact with a sterilization means and/or water being used for cleaning the tool for dental treatment, since the material of the plug-in element directly covers all section of the second electronic section inside the plug-element. The them massive means that there no cavities inside the plug-in element.

Preferably, it is provided that terminals are included in the plug-in element and preferably protrude from the plug-in element. Thus, it is possible to contact and control the second electronic circuit via the terminals. Furthermore, it is provided that the plug-in element is inserted in a connector element, preferably at a proximal end section of the tool. In particular, it is provided that the connector element preferably includes the first electronic circuit and/or a supply line for an irrigation fluid. Thus, all interfaces for supplying the tool with electric energy and/or the irrigation fluid are located in the same connector element, which simplifies the connection of the tool to the corresponding supply lines. Especially, inserting the plug-in element into the connector element, being located at the proximal end section of the tool means that the second electronic circuit is located in the proximal end section of the tool. Thus, the second electronic circuit is located at the rear or proximal end section of the tool. As a result, the wires of the second electronic circuit do not extend over the whole lengths of the ultrasonic scaler or the tool such that the probability of leakage current formation is further decreased.

Preferably, a cross section of the plug-in element and a recess in the connector element form a key lock mechanism, the plug-in element being preferably arched. The key lock mechanism guarantees that the second electronic circuit is probably orientated inside of the connector element. Furthermore, the corresponding configuration of the recess of the connector element and shape of the plug-in element support inserting the plug-in element to the connector element in a proper way. Furthermore, it can be guaranteed, that the proper and suitable plug-in element is inserted into the recess of the connector element.

Preferably, it is provided that the plug-in element is connected to the connector element in an adhesive and/or in a force fitting and/or a form fitting manner. Thus, it can be guaranteed that the plug-in element cannot leave the recess of the connector element and a fixation of the plug-in element in the connector element is established.

Preferably, it is provided that the the second electronic circuit comprises at least one resistance, being completely embedded into the plug-in element. As a result of completely plugging the resistance into the plug-in element, the resistance is completely protected from the environment conditions and thus the probability of a leakage current, especially in the region of the resistance, is reduced.

Preferably, the the second electronic circuit is embedded by an overmolded casing for forming the plug-in element. Overmolding represents a simple and low cost solution for realizing the embedding of the second electronic circuit into the plug-in element. Furthermore, it is easy to realize the desired shape for the key lock mechanism between the connector element and the plug-in element.

Preferably, the plug-in element is connected to the connector element via an ultrasound welding seam. As a result, it is possible to avoid a glue, which needs to be adapted to the materials of the connector element as well as of the plug-in element, which in addition needs to meet the specific requirements of being suitable for sterilization means. As a result, it is possible to connect the connector element and the plug element via a connection, which is not restricted or limited to a very specific glue.

Preferably, it is provided that the plug-in element includes a protruding section, being preferably located between two terminals protruding from the plug-in element, in particular in a proximal section in the assembled state. Such a protruding section for example allows an easy handling of the plug-in element during inserting the plug-in element into the connector element. Furthermore, it can be used for mechanically stabilizing the contact of the terminals of the plug-in element with a corresponding connector of a respective supply line.

Preferably, it is provided that the connector element includes interfaces for the first electronic circuit and/or the second electronic circuit and/or a supply line for an irrigation fluid. As a result, the complete supply of the tool can be established by the connector element.

Preferably, the material of the plug-in element distinguishes from the material of the connector element. Especially, it is conceivable to use two different materials to adapt the materials to the respective task of the section. As a consequence, it is for example possible to use a higher insulating material for the plug-in element, while the insolation effect of the material of the connector element might not as high as of the material of the plug-in element.

Another subject matter of the present invention is a plug-in element for a tool according to the present invention. All benefits and specifications which have been discussed in context of the tool applies analogously for the plug-in element and vice versa.

Another subject matter of the present invention is a method for manufacturing a tool according to the present invention, comprising
- providing a first electronic circuit and/or second electronic circuit,
- overmolding only the second electronic circuit, at least partially for embedding the second electronic circuit to form a plug-in element, and
- inserting the plug-in element into a connector element of the tool.

All benefits and specifications being discussed in context of the tool apply analogously for the method and vice versa.

Preferably, it is provided that the plug-in element is connected to the connector element by using an adhesive and/or by ultrasound welding. Thus, it is possible to create a strong connection between the connector element and the plug-in element.

Wherever not already described explicitly, individual embodiments or their individual aspects and features can be combined or exchanged with one another without limiting or widening the scope of the described invention, whenever such a combination or exchange is meaningful and in the sense of this invention. Advantages which are described with respect to one embodiment of the present invention are, wherever applicable, also advantageous of other embodiments of the present invention.

In the drawings:
- **Fig. 1**: schematically illustrates a tool for dental treatment according to the state of the art,
- **Fig. 2**: schematically illustrates the connector section of the tool of fig-ure 1, and
- **Fig. 3a -3d**: schematically illustrates a method for manufacturing a tool according to a preferred embodiment of the present invention.

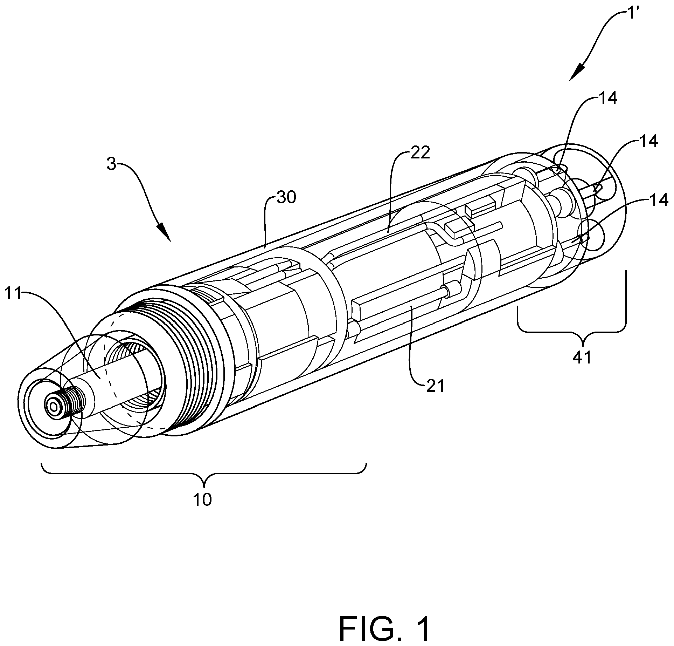

In **Figure 1** schematically a tool according to the state of the art (hereinafter called "tool") 1' for a dental treatment according to the state of the art in a cross sectional view. Especially, figure 1 illustrates a tool 1 for a dental treatment, in particular a scaler for removing dental calculus. Such a tool 1 uses a vibration movement, in particular an ultrasound vibration movement, for moving a tool tip (not shown) such that the tool tip, located at or next to dental calculus at a tooth, removes said dental calculus from the tooth being treated during operation. Preferably, the tool 1 includes a transducer 10, in particular being intended to cause the ultrasound vibration movement along a vibration direction. Especially, the transducer 10 includes at least one piezo element, preferably a stack of piezo elements. These piezo elements are typically configured such that an electrical energy can be translated to a small expansion of the piezo element in vibration direction that creates the ultrasound vibration movement of the tool tip. Besides the piezo elements the transducer 10 comprise a back mass and a sonotrode, the sonotrode being directly coupled to the tool tip, for example by a screwing mechanism or a press-fit mechanism. Preferably, the stack of piezo elements is located between the sonotrode and the back mass. In the embodiment illustrated in figure 1, the tool tip can be screwed to the sonotrode via a thread.

In particular, the transducer is a Langevin transducer, causing a vibration motion having a maximum amplitude at the font sides of the transducer 10, especially at the front sides of the sonotrode. In the near of the piezo element or the stack or the piezo elements a node of the established vibration is established during operating the tool.

For supplying the transducer, in particular, the piezo elements of the stack of piezo elements, the tool 1' includes a first electronic circuit 21, which in particular allows supplying electric energy to the piezo elements and to control the operation of the piezo elements. Furthermore, it is preferably provided that the tool 1' includes a second electronic circuit 22, being intended to supply and/or control an additional electronic component, such as a LED light source at the distal end of the tool 1' or detectors / sensors being incorporated in the tool 1'. While supplying the piezo elements with an electric energy requires high voltages, for example between 150 Vrms to 300 Vrms, which have to be handled by the first electronic circuit 21, the additional second electronic circuit 22 requires only a low power and a low voltage for supplying the components, for example a voltage between 2 Vdc and 6 Vdc. Typically, the first electronic circuit 21 and/or the second electronic circuit 22 are supplied by the same power supply given a voltage between 18 Vdc to 24 Vdc. As a result, the voltage being supplied for the first electronic circuit 21 needs to be increased by means of a transformer and the voltage for the second electronic circuit 22 needs to be decreased by means of the transformer. However, the first electronic circuit 21 and the second electronic circuit 22 are prone for leakages, in particular leakage currents. Especially, the harsh environment of the tool 1', in particular when it is used for a dental treatment, increase the probability of a leakage. For example, immersion in water mixed with temperature, thermodisinfection, sterilization and/or ultrasound activation can cause a penetration of intersticial areas by water and conductive agents, which could result a leakage line or including a leakage line in a first electronic circuit 21 and/or second electronic circuit 22. However, such a leakage line could finally result in a damage of the first electric circuit 21 and/or the second electronic circuit 22. Furthermore, the patient could feel this leakage current, since the leakage influences also the supplying and controlling of the piezo elements due to the transformer which is used by the tool 1 for increasing the voltage for the first electronic circuit 21 and for decreasing the voltage of the second electronic circuit 22.

Especially, the first electronic circuit 21 and the second electronic circuit 22 are interlinked with each other by the transformer, in particular, the first electronic circuit 21 being connected to a first terminal of the transformer and the second electronic circuit 22 being connected to the second terminal of the transformer. This causes an increased effect of the leakage current to the current of the first electric circuit 21, when the second electronic circuit 22 has a leakage current.

For avoiding any cross correlations between the first electronic circuit 21 and the second electric circuit 22, it is necessary to isolate the first electronic circuit 21 and the second electronic circuit 22 by insuring a high level of insulation, preferably corresponding to a resistance of 1 MΩ or greater. Furthermore, the tool 1 includes a connector element 40 in a contact section 41 being located at the proximal end of the handpiece 3, in particular, being inserted in the rear or proximal end section of a housing of the tool 1', the housing of the tool being sleeve-like.

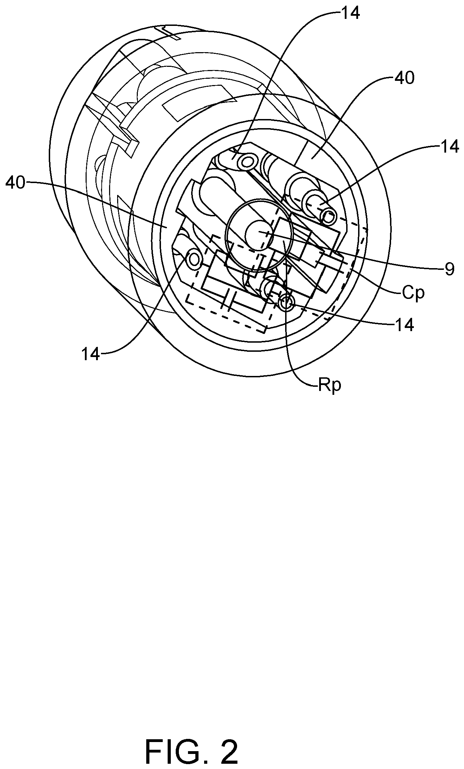

In **Figure 2****,** the connector element 40 of the tool of figure 1' is illustrated. The connector element 40 includes terminals 14 or pins for connecting the tool 1 to external supply lines and/or control units. Furthermore, the connector 40 includes in the center a supply line 9 for transporting an irrigation fluid to the tool tip. The irrigation fluid passes the tool 1, in particular passes through the transducer 10 and is guided to the tool tip. At an irrigation outlet the irrigation fluid is ejected from the tool tip for irrigating the area being treated with the tool tip. Furthermore, the irrigation fluid cools down the transducer 10 during operation. As illustrated in figure 1, there is the possibility to locate the second electronic circuit 22 at a distal front side of the handpiece. However, such a location is of disadvantage, since this increases the length of the wires of the second electronic circuit 22, being prone for effected by the environment. This increases the probability of a leakage current information.

The equivalent resistance of 1 MΩ or greater, which specifies the desired insolation between the first electronic circuit 11 and the second electric circuit 22, being needed for reducing the influence of the second electronic circuit 22 to the operational behavior of the first electronic circuit 21, cannot be realized by the parts being used for forming the connector element 40, because of the difficulty to correctly glue technical plastic being resistance to sterilization, such as PEEK or PPSU.

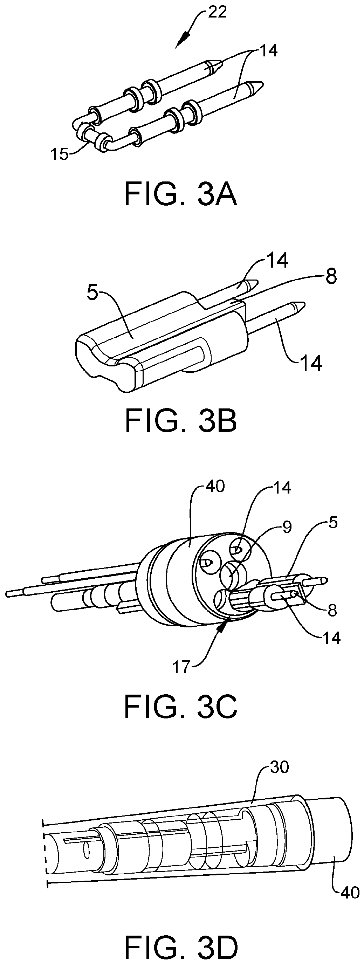

In the **Figures 3a to 3d** a method for realizing a tool 1 according to a preferred embodiment of the present invention is illustrated. In particular, it is provided that the second electronic circuit 22 is provided in a first step. Especially, the second electronic circuit 21 includes a resistance 15 and at least one terminal 14. Preferably, the second electronic circuit 22 includes two terminals 14. For improving the insulation of the second electronic circuit 22, it is provided to overmold the second electronic circuit 22 at least partially. Preferably, it is provided that the pins or terminals 14 of the second electronic circuit 22 protrude from the overmolded section of the second electronic circuit 22. In particular, the overmolded section of the second electronic circuit 22 forms a plug-in element 5, which covers the second electronic circuit 22, in particular the resistance 15 of the second electronic circuit 22. Especially, overmolding creates an embedding in the plug-in element 5, the plug-in element 5 being massive.

As illustrated in figure 3c, the plug-in element 5 is configured such that the plug-in element 5 can be inserted in a corresponding recess 17 of the connector element 40. In particular, the outer shape of the plug-in element 5 is formed such that the plug-in element 5 and the recess 17 form a key lock mechanism that makes sure that only the properly embedded second electronic circuit 22 can be inserted into the connector element 40. Furthermore, the key lock mechanism makes sure that the second electronic circuit 22 is properly arranged and orientated inside of the connector element 40. Furthermore, it is preferably provided that after positioning the plug-in element 5 inside of the connector element 40, the connector element 40 and the plug-in elements 5 are connected with each other in a permanent manner, preferably by a glue and/or by ultrasound welding. Thus, it is possible to fix the plug-in element 5 inside of the connector element 40.

Furthermore, it is provided that the plug-in element 5 changes its cross section along an extension direction being parallel to the direction along which the plug-in element 5 should be inserted to the recess 17 of the connector element 40. Besides the shape of the cross-section, the modification of the cross section can be used for establishing a key-lock-mechanism. It is also conceivable that the modification of the cross section along the extension direction can be used for a form-fitting connection between the connector element 40 and the plug-in element 5, for example in form of a snap mechanism. Preferably the cross section modification along the extension direction includes a step-like course.

Finally, as shown in figure 3d, the connector element 40, having the plug-in element 5, is inserted into the housing 30 by entering an opening at the proximal end of the housing 30.

It turned out that by using the plug-in element 5, which is done by overmolding, it is possible to sufficiently insulate the second electronic circuit 22 from the first electronic circuit 21. Overmolding represents a low cost solution for embedding the second electronic circuit 22 into the massive plug-in module 5. Especially, it is possible to make sure that the second electronic circuit 22 or the terminals 14 are dry for reducing the risk of hydrocaution.

### Reference signs:

- 1: tool
- 1': tool according to the state of the art
- 3: handpiece
- 5: plug-in element
- 8: protruding section
- 10: transducer
- 11: sonotrode
- 14: terminal
- 15: resistance
- 17: recess
- 21: first electronic circuit
- 22: second electronic circuit
- 30: housing
- 40: connector element
- 41: contact section

## Claims

1. A tool (1) for a dental treatment, in particular a scaler, comprising
- a handpiece (3) having a transducer (10),
- a first electronic circuit (21) for supplying and/or controlling the transducer (10) for generating a vibration and
- a second electronic circuit (22) for supplying and/or controlling an additional component,
**characterized in that**
the first electronic circuit (21) and the second electronic circuit (22) are electrically isolated from each other by completely embedding the second electronic circuit (22) in a plug-in element (5), in particular for a contact section (41) of the tool (1), wherein only the second electronic circuit is embedded into the plug-in element (5).

2. The tool (1) according to claim 1, wherein the plug-in element (5) is massive.

3. The tool (1) according to one of the preceding claims, wherein terminals (14) are included in the plug-in element (5) and preferably protrude from the plug-in element (5).

4. The tool (1) according to one of the preceding claims, wherein the plug-in element (5) is inserted in a connector element (40), preferably at a proximal end section of the tool (1).

5. The tool (1) according to claim 4, wherein a cross section of the plug-in element (5) and a recess (17) in the connector element (40) form a key-lock mechanism, the plug-in element (5) being preferably arched.

6. The tool (1) according to claim 4, wherein the plug-in element (5) is connected to the connector element (40) in an adhesive and/or in a force fitting and/or and formfitting manner.

7. The tool (1) according to one of the preceding claims, wherein the second electronic circuit (22) is embedded by an overmoulded casing for forming the plug-in element (5).

8. The tool (1) according to claim 4 wherein the plug-in element (5) is connected to the connector element (40) via an ultrasound welding seam.

9. The tool (1) according to one of the preceding claims, wherein the plug-in element (5) includes a protruding section (8), being preferably located between two terminals (14) extending from the plug-in element (5).

10. The tool (1) according to claim 4, wherein the connector element (40) includes interfaces for the first electronic circuit (21) and/or the second electronic circuit (22) and/or a supply line (9) for an irrigation fluid.

11. The tool (1) according to claim 4, wherein the material of the plug-in element (5) distinguishes from the material of the connector element (40).

12. A method for manufacturing a tool (1) according to one of the claims 1 to 11, comprising:
- providing a first electronic circuit (21) and second electronic circuit (22),
- overmolding only the second electronic circuit for completely embedding the second electronic circuit (22) to form a plug-in element (5),
- inserting the plug-in element (5) into a connector element (40) of the tool (1).

13. The method according to claim 12, wherein the plug-in element (5) is connected to the connector element (40) by using an adhesive and/or by ultrasound welding.

## Patentansprüche

1. Werkzeug (1) für eine zahnärztliche Behandlung, insbesondere ein Scaler, aufweisend
- ein Handstück (3) mit einem Wandler (10),
- eine erste elektronische Schaltung (21) zum Versorgen und/oder Steuern des Wandlers (10) zur Erzeugung einer Vibration und
- eine zweite elektronische Schaltung (22) zum Versorgen und/oder Steuern einer zusätzlichen Komponente,
**dadurch gekennzeichnet, dass** die erste elektronische Schaltung (21) und die zweite elektronische Schaltung (22) elektrisch voneinander isoliert sind, indem die zweite elektronische Schaltung (22) vollständig in ein Steckerelement (5), insbesondere für einen Kontaktabschnitt (41) des Werkzeugs (1), eingebettet ist, wobei nur die zweite elektronische Schaltung in das Steckerelement (5) eingebettet ist.

2. Werkzeug (1) nach Anspruch 1, wobei das Steckerelement (5) massiv ist.

3. Werkzeug (1) nach einem der vorangehenden Ansprüche, wobei Anschlüsse (14) in dem Steckerelement (5) vorhanden sind und bevorzugt aus dem Steckerelement (5) hervorstehen.

4. Werkzeug (1) nach einem der vorangehenden Ansprüche, wobei das Steckerelement (5) in ein Verbindungselement (40), bevorzugt an einem proximalen Endabschnitt des Werkzeugs (1), eingesetzt ist.

5. Werkzeug (1) nach Anspruch 4, wobei ein Querschnitt des Steckerelements (5) und eine Aussparung (17) in dem Verbindungselement (40) einen Schlüsselverriegelungsmechanismus bilden, wobei das Steckerelement (5) bevorzugt gewölbt ist.

6. Werkzeug (1) nach Anspruch 4, wobei das Steckerelement (5) mit dem Verbindungselement (40) adhäsiv und/oder kraftschlüssig und/oder formschlüssig verbunden ist.

7. Werkzeug (1) nach einem der vorangehenden Ansprüche, wobei die zweite elektronische Schaltung (22) durch ein umspritztes Gehäuse zur Bildung des Steckerelements (5) eingebettet ist.

8. Werkzeug (1) nach Anspruch 4, wobei das Steckerelement (5) über eine Ultraschallschweißnaht an das Verbindungselement (40) angeschlossen ist.

9. Werkzeug (1) nach einem der vorangehenden Ansprüche, wobei das Steckerelement (5) einen hervorstehenden Abschnitt (8) umfasst, der bevorzugt zwischen zwei von dem Steckerelement (5) ausgehenden Anschlüssen (14) positioniert ist.

10. Werkzeug (1) nach Anspruch 4, wobei das Verbindungselement (40) Schnittstellen für die erste elektronische Schaltung (21) und/oder die zweite elektronische Schaltung (22) und/oder eine Versorgungsleitung (9) für eine Spülflüssigkeit umfasst.

11. Werkzeug (1) nach Anspruch 4, wobei sich das Material des Steckerelements (5) von dem Material des Verbindungselements (40) unterscheidet.

12. Verfahren zur Herstellung eines Werkzeugs (1) nach einem der Ansprüche 1 bis 11, umfassend:
- Bereitstellen einer ersten elektronischen Schaltung (21) und einer zweiten elektronischen Schaltung (22),
- Umspritzen von nur der zweiten elektronischen Schaltung zum vollständigen Einbetten der zweiten elektronischen Schaltung (22), um ein Steckerelement (5) zu bilden,
- Einsetzen des Steckerelements (5) in ein Verbindungselement (40) des Werkzeugs (1).

13. Verfahren nach Anspruch 12, wobei das Steckerelement (5) mit dem Verbindungselement (40) durch Verwendung eines Adhäsivs und/oder durch Ultraschallschweißen angeschlossen wird.

## Revendications

1. Outil (1) pour un traitement dentaire, en particulier détartreur, comprenant
- une pièce à main (3) comportant un transducteur (10),
- un premier circuit électronique (21) pour alimenter et/ou commander le transducteur (10) afin de générer une vibration, et
- un deuxième circuit électronique (22) pour alimenter et/ou commander un composant supplémentaire,
**caractérisé en ce que**
le premier circuit électronique (21) et le deuxième circuit électronique (22) sont isolés électriquement l'un de l'autre par encastrement complet du deuxième circuit électronique (22) dans un élément enfichable (5), en particulier pour une section de contact (41) de l'outil (1),
seul le deuxième circuit électronique étant encastré dans l'élément enfichable (5).

2. Outil (1) selon la revendication 1,
dans lequel l'élément enfichable (5) est massif.

3. Outil (1) selon l'une des revendications précédentes,
dans lequel des bornes (14) sont incluses dans l'élément enfichable (5) et font de préférence saillie par rapport à l'élément enfichable (5).

4. Outil (1) selon l'une des revendications précédentes,
dans lequel l'élément enfichable (5) est inséré dans un élément connecteur (40), de préférence à une section d'extrémité proximale de l'outil (1).

5. Outil (1) selon la revendication 4,
dans lequel une section transversale de l'élément enfichable (5) et une cavité (17) dans l'élément connecteur (40) forment un mécanisme de verrouillage par clé, l'élément enfichable (5) étant de préférence arqué.

6. Outil (1) selon la revendication 4,
dans lequel l'élément enfichable (5) est connecté à l'élément connecteur (40) de manière adhésive et/ou par ajustement forcé et/ou par ajustement de forme.

7. Outil (1) selon l'une des revendications précédentes,
dans lequel le deuxième circuit électronique est encastré dans une enveloppe surmoulée pour former l'élément enfichable (5).

8. Outil (1) selon la revendication 4,
dans lequel l'élément enfichable (5) est connecté à l'élément connecteur (40) par un cordon de soudure à ultrasons.

9. Outil (1) selon l'une des revendications précédentes,
dans lequel l'élément enfichable (5) comprend une section saillante (8) située de préférence entre deux bornes (14) s'étendant à partir de l'élément enfichable (5).

10. Outil (1) selon la revendication 4,
dans lequel l'élément connecteur (40) comprend des interfaces pour le premier circuit électronique (21) et/ou pour le deuxième circuit électronique (22) et/ou pour une ligne d'alimentation (9) pour un fluide d'irrigation.

11. Outil (1) selon la revendication 4,
dans lequel le matériau de l'élément enfichable (5) se distingue du matériau de l'élément connecteur (40).

12. Procédé de fabrication d'un outil (1) selon l'une des revendications 1 à 11, consistant à :
- fournir un premier circuit électronique (21) et un deuxième circuit électronique (22),
- surmouler uniquement le deuxième circuit électronique pour encastrer complètement le deuxième circuit électronique (22) afin de former un élément enfichable (5),
- insérer l'élément enfichable (5) dans un élément connecteur (40) de l'outil (1).

13. Procédé selon la revendication 12,
dans lequel l'élément enfichable (5) est connecté à l'élément connecteur (40) à l'aide d'un adhésif et/ou par soudage aux ultrasons.
